Europäisches Patentamt

**European Patent Office**

**Office européen des brevets**

(19)

(11) Publication number: **0 136 439**
**A2**

(12) # EUROPEAN PATENT APPLICATION

(21) Application number: **84108644.0**

(22) Date of filing: **21.07.84**

(51) Int. Cl.⁴: **C 08 F 246/00**
**C 08 F 2/06, C 08 F 220/12**

(30) Priority: **25.07.83 US 517104**

(43) Date of publication of application:
**10.04.85 Bulletin 85/15**

(84) Designated Contracting States:
**BE DE FR GB IT NL**

(71) Applicant: **The B.F. GOODRICH Company**
**Dept. 0015 WHB-6 500 South Main Street**
**Akron, Ohio 44318(US)**

(72) Inventor: **Driscoll, William Joseph**
**1531 West 29th Street**
**Lorain Ohio 44053(US)**

(74) Representative: **von Kreisler, Alek, Dipl.-Chem. et al,**
**Deichmannhaus am Hauptbahnhof**
**D-5000 Köln 1(DE)**

(54) Acrylic polymers of intermediate molecular weight.

(57) Thermoplastic polymers of intermediate molecular weight are prepared by polymerizing a hydrophilic monomer such as acrylic acid, a soft monomer such as ethyl acrylate, and a hard monomer such as methyl methacrylate, in the presence of a free radical initiator in a solvent selected from methyl ethyl ketone and ethanol.

EP 0 136 439 A2

1

# ACRYLIC POLYMERS OF INTERMEDIATE MOLECULAR WEIGHT

## BACKGROUND OF THE DISCLOSURE

U.S. patent 3,007,887 to Essig describes preparation of water-soluble, thermosetting polymers of acrylic or methacrylic acids, N-methylol acrylamide or methacrylamide, an alkyl acrylate, and optionally, an alkyl methacrylate. Amount of the acid is 3 to 12 parts by weight, amount of the acrylamide is 8 to 25 parts, amount of acrylic acid ester is 45 to 89 parts, and amount of methacrylic acid ester is 0 to 44 parts.

The water-soluble thermosetting polymers of the Essig patent are most conveniently prepared from a batch charge of the monomers in an excess of a substantially anhydrous lower aliphatic monohydric alcohol such as methanol, ethanol, n-propanol, isopropanol and the butanols at a temperature of from about 50°C to about 100°C in the presence of from about 0.25 to about 2 parts by weight of a free radical polymerization initiator. The polymers are made at high conversion in excess of 80% and generally 95% to 100% conversion. The polymerization reaction can be carried out at reflux in a closed container under autogenous pressure or under artificially induced superatmospheric or subatmospheric pressure, preferably in an oxygen-free atmosphere.

The polymers are converted from alcohol solutions to water solutions by the addition of water and a neutralizing agent such as ammonia, a hydrazine, or a low-boiling amine to the alcoholic solution of polymer followed by azeotropic distillation which removes last traces of the alcohol and the excess neutralizing agent. The final aqueous solution of polymer salt is preferably in the range of pH 5-8 and more preferably in the range of pH 6-7, with a total solids content of from about 2 to about 40 percent by weight and preferably from about 5 to about 30 percent by weight of polymer in water.

The polymers of the Essig patent can be insolubilized by a heat cure at a temperature of from about 100°C to about 180°C. Generally, a cure cycle of 5 minutes at 160°C is sufficient to produce an essentially insoluble polymer. It is generally preferred, however, to give the water-soluble polymer a cure cycle of from 30 minutes to one hour at about 160°C to insure complete insolubility and complete alkali insensitivity.

The polymers prepared in accordance with the Essig patent are useful in impregnation, coating, and dyeing of woven and nonwoven fabrics; they are useful in the manufacture of papers and water-based paints; and they serve as pigment binders, primers and protective coatings for sheet metals especially those that undergo flexing or bending, such as food and beverage containers.

## SUMMARY OF THE INVENTION

This invention relates to preparation of acrylic polymers of intermediate weight average molecular weight falling within the range of about 50,000 to 150,000 by polymerizing a hydrophilic monomer such as acrylic acid, a soft monomer such as ethylacrylate, and a hard monomer such as methyl methacrylate at a temperature of about 80°C in a solvent selected from ethanol and methyl ethyl ketone in the presence of a free radical initiator.

## DETAILED DESCRIPTION OF THE INVENTION

The polymers described herein can be prepared in the manner disclosed by the Essig patent 3,007,887, however, they do not contain any N-alkylol acrylamide or methacrylamide and for that reason, are thermoplastic. Another important distinction resides in the use of the solvent. Whereas the Essig patent discloses the use of anhydrous lower aliphatic monohydric alcohols such as methanol, ethanol, n-propanol, isopropanol, and the butanols, it was unexpectedly discovered that ethanol and methyl ethyl ketone solvents, with everything else being the same, produce polymers of intermediate molecular weight. For instance, three samples of polymers were prepared in the same way from the same formulation, with the exception of the solvent. Whereas the polymer sample prepared in isopropanol solvent had low molecular weight and the polymer sample prepared in ethyl acetate solvent had high molecular weight, the polymer sample prepared in methyl ethyl ketone solvent had an intermediate molecular weight. For illustrative purposes, results in summary form are given below:

| Polymer | Solvent | Molecular Weight (Mw) |
|---------|---------|-----------------------|
| Sample A | Isopropanol | 31,700 |
| Sample B | Methyl Ethyl Ketone | 112,000 |
| Sample C | Ethyl Acetate | 286,000 |

The polymers described herein are prepared by polymerizing a hydrophilic monomer, a soft monomer, and a hard monomer. It should be understood that more than one monomer in any one or all of the categories can be polymerized. Amounts of the monomers can vary widely, as is defined below, in parts by weight:

| Monomer | Broad Range | Preferred Range |
|---------|-------------|-----------------|
| Hydrophilic | 5-50 | 20-30 |
| Soft | 20-50 | 25-40 |
| Hard | 20-60 | 30-50 |

The hydrophilic monomers are selected from monounsaturated monocarboxylic and dicarboxylic acids and anhydrides thereof containing 3 to 8 carbon atoms such as acrylic acid, methacrylic acid, itaconic acid, maleic acid, and fumaric acid. Since maleic anhydride will react with ethanol to form a half ester, use thereof with ethanol, therefore, should be avoided. The combination of maleic acid and ethanol as a solvent in the polymerization reaction is acceptable. In a preferred embodiment, the hydrophilic monomer is selected from monounsaturated monocarboxylic acids containing 3 to 5 carbon atoms such as acrylic acid and methacrylic acid, especially acrylic acid.

The soft monomers are selected from alkyl acrylates containing 1 to 12 carbon atoms in the alkyl group. Preferred soft monomers are selected from alkyl acrylates containing 2 to 8 carbon atoms, examples of which include ethyl acrylate, propyl acrylate, and n-butyl acrylate.

The hard monomers are selected from alkyl methacrylates containing 1 to 3 carbon atoms in the alkyl group, styrene and substituted styrenes, acrylonitrile, vinyl chloride, and generally any compatible monomer the homopolymer of which has Tg above about 50°C. Preferred hard monomers are selected from alkyl methacrylates containing 1 to 2 carbon atoms in the alkyl group, especially methyl methacrylate.

The solvents that can be used to prepare acrylic polymers of intermediate molecular weight include methyl ethyl ketone and ethanol, especially methyl ethyl ketone. These solvents boil at about 80°C. Amount of the solvent used can vary from 10 to 500 parts of the monomers, preferably, however, amount of solvent is about 20 to 200 parts per 100 parts of the monomers, on weight basis.

Free radical initiators are used in the polymerization of the monomers herein. Amount of such initiators can vary from 0.1 to 5, preferably 0.2 to 2 parts per 100 parts of the monomers, on weight basis.

The initiators are generally selected from organic peroxides and azobisnitriles containing a total of 8 to 22, preferaly 10 to 16 carbon atoms. Examples of suitable initiators include acetyl benzoyl peroxide, peracetic acid, hydroxyheptyl peroxide, isopropyl percarbonate, methyl ethyl ketone peroxide, cyclohexanone peroxide, cyclohexyl hydroperoxide, 2,4-dichlorobenzoyl peroxide, decanoyl peroxide, cumene hydroperoxide, hydrogen peroxide, caprylyl peroxide, methyl cyclohexyl hydroperoxide, t-butyl permaleic acid, t-butyl perbenzoate, di-t-butyl diperphthalate, azobisisobutyronitrile, t-butyl peroxypivalate, and azonitriles such as 2,2'azobis(2-methylbutyronitrile), 2,2'-azobis(2,4-dimethyl-4-methoxypentanenitrile), 2,2'azobis(2,4-dimethylpentanenitrile, the so-called redox and heavy metal polymerization initiators, and the like. The polymerization process embodied in this invention may also be initiated by the use of nuclear radiation, X-rays, ultra-violet rays and ultrasonic waves.

The polymerization reaction can be conducted at a temperature of about 70 to 90°C, preferably about 80°C. Since the solvents boil at about 80°C, it should be apparent that the reaction is carried out under reflux conditions until conversion in excess of about 80% is reached, preferably 95 to 100%. Molecular weight of the resulting polymers is in the range of about 50,000 to 150,000, preferably about 70,000 to 120,000. The molecular weight is weight average molecular weight which is determined by gel permeation chromatography. Since an acid would react with the packing in a chromatograph column, the acid moieties in the polymer are converted to an ester when determining molecular weight by this method. This esterification is carried out by mixing 0.4 grams of a polymer with 6 milliliters of trimethyl orthoacetate at a temperature below about 100°C, i.e., below boiling, which converts acid groups to methyl ester groups. Then, the esterified polymer is mixed in tetrahydrofuran to a concentration of 0.3% and passed through a chromatograph column.

In a preferred embodiment, preparation of the thermoplastic polymers described herein is accomplished by charging the solvent to a reactor and heating it to reflux. When reflux conditions are established, a monomer mixture is metered into the reactor over a period of about 3 hours and a free radical initiator diluted in the same solvent is metered into the reactor over a period of about 4 hours. Metering the monomer mixture and the initiator to the reactor is started at about the same time with the result that addition of the initiator is continued for approximately one additional hour after addition of the monomer mixture is completed. Refluxing is continued an additional one hour after addition of the initiator is completed. Therefore, from the inception point, refluxing is continued for a total of about 5 hours or until monomer conversion of 95 to 100% is attained. At this point, the solvent is boiled-off and the polymer is dried and granulated. The polymer can be rendered readily water-soluble by neutralizing same with an alkali metal hydroxide, ammonium hydroxide, or ammonia.

A particular application for these polymers is as coatings. The coating material is prepared by dissolving the dry polymer in a suitable solvent. Then, a polymerizable monomer and a photoinitiator can be added to the polymer solution. The resulting solution is formed into a film which is exposed with a suitable light source through a mask and the unexposed film is removed with an alkaline solution.

The following examples demonstrate preparation of thermosetting acrylic polymers of intermediate molecular weight by the use of a specific solvent.

Amounts given in the examples are in parts by weight unless otherwise indicated.

### Example 1

This example demonstrates preparation of a thermoplastic acrylic polymer of intermediate molecular weight by polymerizing the following monomer mixture:

acrylic acid           - 25 wt.%
ethyl acrylate         - 30 wt%
methyl methacrylate - 45 wt.%

The procedure involved the addition of 2000 parts of methyl ethyl ketone solvent to a reactor and heating the solvent to reflux of about 80°C. Next, a monomer mixture of 550 parts acrylic acid, 660 parts ethyl acrylate, and 990 parts of methyl methacrylate was metered to the reactor uniformly over 3 hours and a solution of 200 parts methyl ethyl ketone and 11.88 parts of initiator was metered to the reactor over 4 hours. The initiator is a solution of 75 parts t-butyl peroxypivalate in 25 parts of mineral spirits. Addition of the monomer mixture and the initiator solution was commenced simultaneously with the result that addition of the initiator solution was continued about one hour after addition of the monomer mixture was completed. After addition of the initiator was completed, reflux was continued for one more hour and the reaction mixture was then cooled.

The final polymer product in the form of a solution was analyzed, results of which are given below:

total solids                       -       49.4%
acid number                       -       194.7
COOH as acrylic acid           -        25%
Brookfield viscosity @ 25°C -   18,460 cps
Mw                                    - 100,000
Mn                                    -   15,200

### Example 2

This example demonstrates preparation of a thermoplastic acrylic terpolymer of intermediate molecular weight by polymerizing the following monomer mixture:

| | |
|---|---|
| acrylic acid | - 25 parts |
| ethyl acrylate | - 38 parts |
| methyl methacrylate | - 37 parts |

As in the previous example, 2000 parts of methyl ethyl ketone was added to a reactor and heated to reflux of about 80°C. Simultaneously, a monomer mixture and an initiator solution were metered into the reactor, the monomer mixture being metered in over a period of 3 hours and the initiator solution over a period of 4 hours. The monomer mixture consisted of 550 parts acrylic acid, 836 parts of ethyl acrylate, and 814 parts of methyl methacrylate whereas the initiator solution consisted of 200 parts of methyl ethyl ketone and 11.88 parts of a 75-25 solution of t-butyl peroxypivalate in mineral spirits. Reflux was continued for one more hour after addition of the initiator was concluded. The resulting polymer solution was cooled and then analyzed as follows:

| | |
|---|---|
| total solids | - 49.6% |
| acid number | - 183.1 |
| COOH as acrylic acid | - 23.5% |
| Brookfield viscosity | - 11,260 cps |
| Mw | - 93,500 |
| Mn | - 17,500 |

### Example 3

This example demonstrates preparation of thermoplastic acrylic polymers all under the same conditions with the exception of the solvent. Procedure of Example 1 was followed. Polymer Sample A was prepared in isopropanol solvent, Sample B was prepared in methyl ethyl ketone, and Sample C was prepared in ethyl acetate. In each case, the following monomer mixture was used:

| Monomer | Wt. Parts | Wt.% |
|---|---|---|
| acrylic acid | 200 | 25 |
| ethyl acrylate | 304 | 38 |
| methyl methacrylate | 296 | 37 |

Amount of solvent in each case was 720 parts and the initiator was prepared by mixing 80 parts of solvent and 4.32 of t-butyl peroxypivalate in mineral spirits in the ratio of 75/25.

The monomer mixture was metered into a reactor over 3 hours and the initiator solution, over 4 hours. Refluxing was continued for one hour after addition of the initiator was completed. The samples were analyzed and the following data was obtained:

| Polymer Sample | Solvent | Molecular Wt. (Mw) |
|---|---|---|
| Sample A | Isopropanol | 31,700 |
| Sample B | Methyl Ethyl Ketone | 112,000 |
| Sample C | Ethyl Acetate | 286,000 |

### CLAIMS

1. A process for preparing a thermoplastic polymer of intermediate molecular weight falling within the range of about 50,000 to 150,000 weight average molecular weight comprising polymerizing a monomer mixture in the presence of a free radical initiator in a solvent selected from the group consisting of methyl ethyl ketone, ethanol, and mixtures thereof, said monomer mixture consisting essentially of at least one hydrophilic monomer, at least one soft monomer and at least one hard monomer in the following amounts, given in parts by weight:

| Monomer | Range |
| --- | --- |
| Hydrophilic | 5-50 |
| Soft | 20-50 |
| Hard | 20-60 |

said hydrophilic monomer is selected from monounsaturated monocarboxylic and dicarboxylic acids containing 3 to 8 carbon atoms, said soft monomer is selected from alkyl acrylates wherein the alkyl group contains 1 to 12 carbon atoms, and said hard monomer is selected from alkyl methacrylates containing 1 to 3 carbon atoms in the alkyl group, styrene, substituted styrenes, acrylonitrile, and vinyl chloride.

2. Process of claim 1 wherein said hydrophilic monomer is selected from monounsaturated monocarboxylic acids containing 3 to 5 carbon atoms, said soft monomer is selected from alkyl acrylates containing 2 to 8 carbon atoms in the alkyl group, and said hard monomer is selected from alkyl methacrylates containing 1 to 2 carbon atoms in the alkyl group.

3. Process of claim 2 wherein said monomers are polymerized in the following amounts:

| Monomer | Range |
| --- | --- |
| Hydrophilic | 20-30 |
| Soft | 25-40 |
| Hard | 30-50 |

4. Process of claim 3 wherein said solvent is used in amount of 10 to 500 parts by weight per 100 weight parts of said monomers and said initiator is used in amount of 0.1 to 5 weight parts per 100 weight parts of said monomers.

5. Process of claim 4 wherein amount of said solvent is 20 to 200 weight parts per 100 weight parts of said monomers and amount of said initiator is 0.2 to 2 weight parts per 100 weight parts of said monomers.

6. Process of claim 5 wherein said initiator is selected from t-butyl peroxypivalate, benzoyl peroxide, caprylyl peroxide, decanoyl peroxide, 2,2'-azobis(2-methylbutyronitrile), 2,2'-azobis(2,4-dimethyl-4-methoxy-pentanenitrile, and 2,2'azobis(2,4-dimethyl-pentanenitrile.

7. Process of claim 5 wherein said initiator is selected from hydrogen peroxide, organic peroxides, and azobisnitriles.

8. Process of claim 5 wherein said solvent is methyl ethyl ketone and wherein said polymerization is carried out to a conversion in excess of 80% .

9. Process of claim 4 wherein solvent is methyl ethyl ketone and wherein said polymerization is carried out to in excess of 80% conversion.

10. Process of claim 6 wherein said polymer has molecular weight of 70,000 to 120,000, said solvent is methyl ethyl ketone, said hydrophilic monomer is acrylic acid, said soft monomer is ethyl acrylate, said hard monomer is methyl methacrylate, and said polymerization is carried out to a conversion in excess of 80%.